# EUROPÄISCHE PATENTSCHRIFT

(11) **EP 2 147 456 B1**
(45) Veröffentlichungstag und Bekanntmachung des Hinweises auf die Patenterteilung: **05.10.2011**
(21) Anmeldenummer: 08736156.4
(22) Anmeldetag: 11.04.2008
(51) Int. Cl.: H01J 61/12

(54) **HOCHDRUCKENTLADUNGSLAMPE UND FAHRZEUGSCHEINWERFER MIT HOCHDRUCKENTLAUDUNGSLAMPE**
HIGH-PRESSURE DISCHARGE LAMP AND VEHICLE HEADLIGHT WITH HIGH-PRESSURE DISCHARGE LAMP
LAMPE À DÉCHARGE HAUTE PRESSION ET PHARE DE VÉHICULE AUTOMOBILE AVEC LAMPE À DÉCHARGE HAUTE PRESSION

(30) Priorität: 19.04.2007 DE 102007018614
(43) Veröffentlichungstag der Anmeldung: 27.01.2010
(73) Patentinhaber: OSRAM Gesellschaft mit beschränkter Haftung, 81543 München (DE)
(72) Erfinder: GRUNDMANN, Dirk, 13125 Berlin (DE)
(86) Internationale Anmeldenummer: PCT/EP2008/054447
(87) Internationale Veröffentlichungsnummer: WO 2008/128910

(56) Entgegenhaltungen:
- JP-A- 2007 042 621
- US-A- 4 992 700
- US-A- 5 013 968
- US-A1- 2004 183 446

## Beschreibung

Die Erfindung betrifft eine Hochdruckentladungslampe gemäß dem Oberbegriff des Patentanspruchs 1 und einen Fahrzeuqscheinwerfer mit einer derartigen Hochdruckentladungslampe.

### I. Stand der Technik

Eine derartige Hochdruckentladungslampe ist beispielsweise in der Offenlegungsschrift EP 1 465 237 A2 beschrieben. Die quecksilberfreie, ionisierbare Füllung der in der EP 1 465 237 A2 offenbaren Hochdruckentladungslampe beinhaltet Zinkjodid und Indiumjodid, wobei das Gewichtsverhältnis von Zinkjodid und Indiumjodid 12,5 beträgt. Der Kaltfülldruck des Xenon beträgt 1,18 Megapascal und das Entladungsgefäß weist ein Volumen von 24 mm³ auf. Die Hochdruckentladungslampe dient als Lichtquelle in einem Fahrzeugscheinwerfer.

Die Offenlegungsschrift JP 2007-042621 beschreibt eine Hochdruckentladungslampe mit quecksilberfreier Füllung für Fahrzeugscheinwerfer.

### II. Darstellung der Erfindung

Es ist Aufgabe der Erfindung, eine gattungsgemäße Hochdruckentladungslampe mit einer verbesserten Lichtstrommaintenance und einer erhöhten Lebensdauer.

Diese Aufgabe wird erfindungsgemäß durch die Merkmals des Patentanspruchs 1 gelöst. Besonders vorteilhafte Ausführungen der Erfindung sind in den abhängigen patentansprüchen beschrieben.

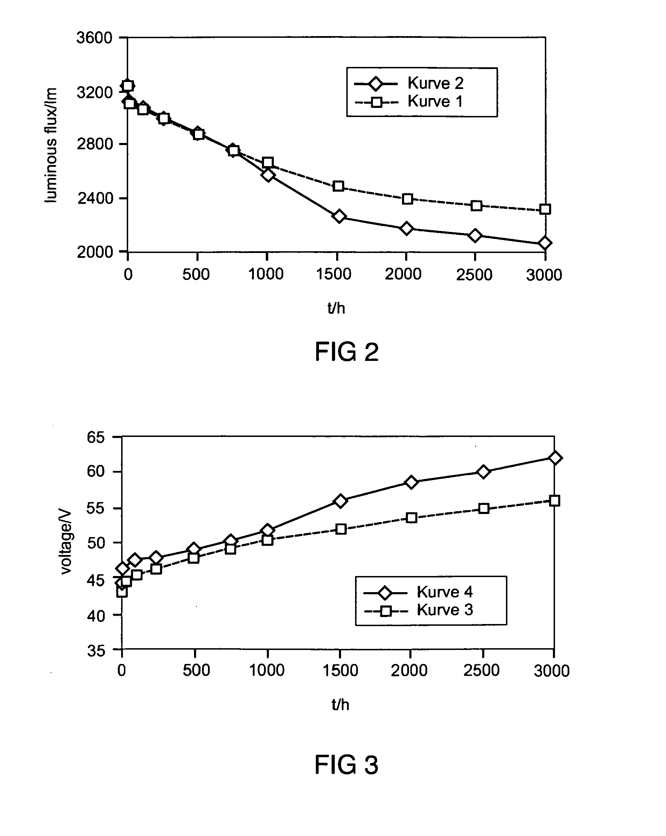

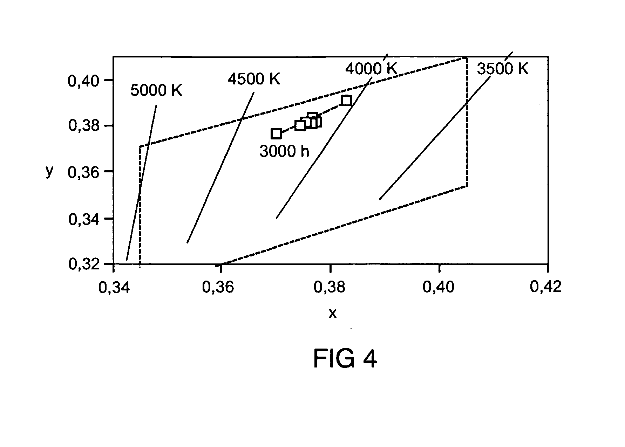

Die erfindungsgemäße Hochdruckentladungslampe besitzt ein gasdicht verschlossenes Entladungsgefäß, in dem Elektroden und eine ionisierbare Füllung zwecks Erzeugung einer Gasentladung eingeschlossen sind, wobei die ionisierbare Füllung als quecksilberfreie Füllung ausgebildet ist, die Xenon und Halogenide der Metalle Natrium, Scandium, Zink und Indium umfasst, und das Gewichtsverhältnis der Halogenide von Zink und Indium im Bereich von 20 bis 100, vorzugsweise bei 50, liegt und wobei der Kaltfülldruck des Xenon im Bereich von 1,3 Megapascal bis 1,8 Megapascal liegt. Es hat sich gezeigt, dass dadurch die Abnahme des Lichtstroms mit der Betriebsdauer der Hochdruckentladungslampe und die Zunahme der Brennspannung der Hochdruckentladungslampe mit ihrer Betriebsdauer verringert werden können. Das heißt, die erfindungsgemäße Hochdruckentladungslampe besitzt im Vergleich zur Hochdruckentladungslampe gemäß dem Stand der Technik eine verbesserte Lichtstrommaintenance und lässt, aufgrund des geringeren Brennspannungsanstiegs über die Betriebsdauer, eine längere Lebensdauer erwarten. Außerdem zeigen die erfindungsgemäßen Hochdruckentladungslampen über ihre Betriebsdauer nur eine geringe Verschiebung des Farbortes des von ihnen emittierten Lichts. Insbesondere wandert der Farbort nur innerhalb der gemäß der ECE Regel 99 erlaubten Grenzen, die durch das Trapez in Figur 4 dargestellt sind. In den Figuren 2 und 3 ist ein Vergleich der Hochdruckentladungslampen gemäß dem Stand der Technik mit den erfindungsgemäßen Hochdruckentladungslampen für die Abnahme des Lichtstroms und den Brennspannungsanstieg dargestellt. In Figur 4 ist die Farbortverschiebung der erfindungsgemäßen Hochdruckentladungslampe über die ersten 3000 Betriebsstunden dargestellt.

Sowohl der vergleichsweise hohe Kaltfülldruck des Xenons als auch der vergleichsweise hohe Gewichtsanteil der Halogenide des Zinks tragen wesentlich zur Einstellung der Brennspannung der erfindungsgemäßen Hochdruckentladungslampe, das heißt der Spannung, die sich nach Beendigung der Zündphase, im quasistationären Betriebszustand über der Entladungsstrecke der erfindungsgemäßen Hochdruckentladungslampe einstellt, bei. Die Halogenide des Indiums sind in einem so geringen Gewichtsanteil vertreten, dass sie zwar zur Einstellung des Farbortes des von der erfindungsgemäßen Hochdruckentladungslampe emittierten Lichts beitragen, aber keinen nennenswerten Beitrag zur Einstellung der Brennspannung der erfindungsgemäßen Hochdruckentladungslampe leisten. Die Halogenide des Indiums dienen bei der erfindungsgemäßen Hochdruckentladungslampe, ebenso wie die Halogenide von Natrium und Scandium, hauptsächlich der Lichtemission.

Vorteilhafterweise liegt der Gewichtsanteil der Halogenide von Zink im Bereich von 0,88 Mikrogramm bis 2,67 Mikrogramm pro 1 mm³ Entladungsgefäßvolumen und der Gewichtsanteil der Halogenide von Indium im Bereich von 0,026 Mikrogramm bis 0,089 Mikrogramm pro 1 mm³ Entladungsgefäßvolumen. Als Halogenide können Jodide, Bromide oder Chloride verwendet werden.

Der Gewichtsanteil der Halogenide von Natrium liegt vorteilhafterweise im Bereich von 6,6 Mikrogramm bis 13,3 Mikrogramm pro 1 mm³ des Entladungsgefäßvolumen und der Gewichtsanteil der Halogenide von Scandium im Bereich von 4,4 Mikrogramm bis 11,1 Mikrogramm pro 1 mm³ des Entladungsgefäßvolumen, um zu gewährleisten, dass die Hochdruckentladungslampe weißes Licht mit einer Farbtemperatur von ca. 4000 Kelvin erzeugt und der Farbort während der Lebensdauer der Hochdruckentladungslampe im Bereich des weißen Lichts, vorzugsweise in den Grenzen des in Figur 4 dargestellten Trapezes, bleibt. Bei einem geringeren Gewichtsanteil können die Verluste an Natrium (bedingt durch Diffusion durch die Gefäßwand des Entladungsgefäßes) und Scandium (bedingt durch chemische Reaktion mit dem Quarzglas des Entladungsgefäßes) nicht mehr ausgeglichen werden und bei einem höheren Gewichtsanteil werden der Farbort und die Farbtemperatur verändert.

Das Volumen des Entladungsgefäßes ist kleiner als 23 mm³, um dem Ideal einer Punktlichtquelle möglichst nahe zu kommen. Für die Verwendung als Lichtquelle in einem Fahrzeugscheinwerfer oder einem anderen optischen System, sollte der lichtemittierende Teil des Entladungsgefäßes, das heißt, der Entladungsraum mit den darin eingeschlossenen Elektroden, möglichst geringe Abmessungen besitzen. Idealerweise sollte die Lichtquelle punktförmig sein, um sie im Brennpunkt eines optischen Abbildungssystems anordnen zu können. Die erfindungsgemä-βe Hochdruckentladungslampe kommt diesem Ideal näher als die Hochdruckentladungslampe gemäß dem Stand der Technik, da sie vorzugsweise ein Entladungsgefäß mit einem kleineren Volumen aufweist. Das Volumen des Entladungsgefäßes der erfindungsgemäßen Hochdruckentladungslampe liegt daher vorteilhafterweise im Bereich von größer gleich 20 mm³ bis kleiner als 23 mm³. Im Fall von kleineren Volumina als 20 mm³ besteht die Gefahr, dass das Quarzglas des Entladungsgefäßes aufgrund der dann während des Lampenbetriebs auftretenden sehr hohen Wandbelastung zur Entglasung neigt.

Der Abstand zwischen den Elektroden der erfindungsgemäßen Hochdruckentladungslampe ist vorzugsweise kleiner als 5 Millimeter, um dem Ideal einer Punktlichtquelle möglichst nahe zu kommen. Für die Verwendung als Lichtquelle in einem Kraftfahrzeugscheinwerfer beträgt der Elektrodenabstand vorzugsweise 4,1 Millimeter. Dadurch ist die erfindungsgemäße Hochdruckentladungslampe optimal an die Abbildungsverhältnisse im Fahrzeugscheinwerfer angepasst.

Die Dicke beziehungsweise der Durchmesser der Elektroden der erfindungsgemäßen Hochdruckentladungslampe liegt vorteilhafterweise im Bereich von 0,27 Millimeter bis 0,36 Millimeter. Elektroden mit einer Dicke in diesem Wertebereich lassen sich noch hinreichend sicher im Quarzglas des Entladungsgefäßes einbetten und besitzen zugleich eine ausreichende Stromtragfähigkeit, die insbesondere während der sogenannten Anlaufphase der Hochdruckentladungslampe bedeutsam ist, während der sie mit dem 3 bis 5-fachen ihrer Nennleistung und ihres Nennstroms betrieben wird. Im Fall von dünneren Elektroden wäre bei der quecksilberfreien Hochdruckentladungslampe keine ausreichende Stromtragfähigkeit mehr gewährleistet und im Fall von dickeren Elektroden bestünde die Gefahr von Rissbildungen im Entladungsgefäß, bedingt durch das Auftreten von mechanischen Spannungen aufgrund der deutlich unterschiedlichen thermischen Ausdehnungskoeffizienten von Entladungsgefäßmaterial, bei dem es sich um Quarzglas handelt, und Elektrodenmaterial, bei dem es sich um Wolfram oder mit Thorium bzw. Thoriumoxid dotiertem Wolfram handelt. Die Elektroden sind jeweils mit einer im Material des Entladungsgefäßes eingebetteten Molybdänfolie verbunden, die eine gasdichte Stromdurchführung ermöglichen, und der geringste Abstand der jeweiligen Molybdänfolie zu dem in den Innenraum des Entladungsgefäßes (10) hineinragenden Ende der mit ihr verbundenen Elektrode beträgt vorteilhafterweise mindestens 5,5 mm, um einen möglichst großen Abstand zwischen der jeweiligen Molybdänfolie und der an den in das Entladungsgefäß hineinragenden Elektrodenspitzen ansetzenden Gasentladung zu gewährleisten. Dieser dadurch bedingte, vergleichsweise große Mindestabstand zwischen den Molybdänfolien und der Gasentladung hat den Vorteil, dass die Molybdänfolien einer geringeren thermischen Belastung und einer geringeren Korrosionsgefahr durch die Halogene in den Halogenverbindungen der ionisierbaren Füllung ausgesetzt sind.

### III. Beschreibung des bevorzugten Ausführungsbeispiels

Nachstehend wird die Erfindung anhand eines bevorzugten Ausführungsbeispiels näher erläutert. Es zeigen:

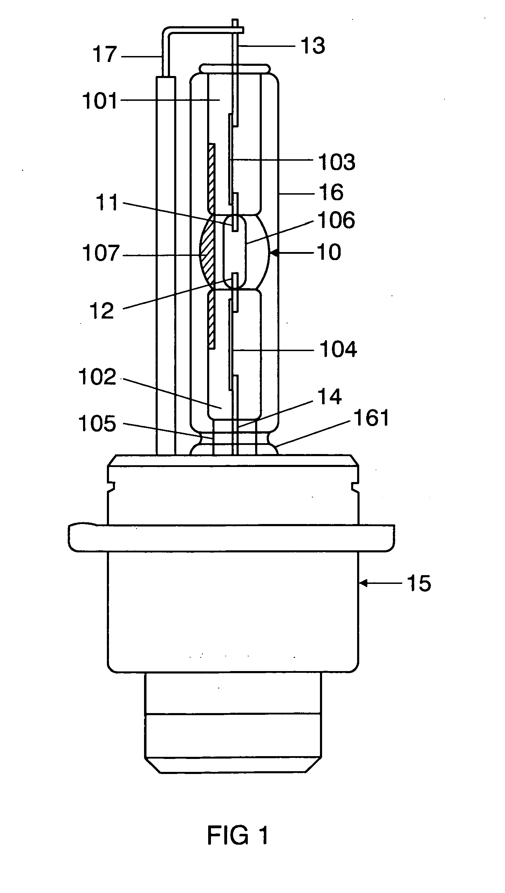

- Figur 1: Eine Seitenansicht einer Hochdruckentladungslampe gemäß des bevorzugten Ausführungsbeispiels der Erfindung in schematischer Darstellung
- Figur 2: Ein Vergleich der Abnahme des Lichtstroms mit zunehmender Betriebsdauer zwischen der erfindungsgemäßen Hochdruckentladungslampe und der Hochdruckentladungslampe gemäß dem Stand der Technik
- Figur 3: Ein Vergleich der Zunahme der Brennspannung mit zunehmender Betriebsdauer zwischen der erfindungsgemäßen Hochdruckentladungslampe und der Hochdruckentladungslampe gemäß dem Stand der Technik
- Figur 4: Eine Darstellung der Verschiebung des Farborts des von den erfindungsgemäßen Hochdruckentladungslampen emittierten Lichts mit zunehmender Betriebsdauer der Lampen

Bei dem bevorzugten Ausführungsbeispiel der Erfindung handelt es sich um eine quecksilberfreie Halogen-Metalldampf-Hochdruckentladungslampe mit einer elektrischen Leistungsaufnahme von 35 Watt. Diese Lampe ist für den Einsatz in einem Fahrzeugscheinwerfer vorgesehen. Sie besitzt ein zweiseitig abgedichtetes Entladungsgefäß 10 aus Quarzglas mit einem Volumen von 22,5 mm³, in dem eine ionisierbare Füllung gasdicht eingeschlossen ist. Im Bereich des Entladungsraumes 106 ist die Innenkontur des Entladungsgefäßes 10 kreiszylindrisch und seine Außenkontur ellipsoidförmig ausgebildet. Der Innendurchmesser des Entladungsraumes 106 beträgt 2,6 mm und sein Außendurchmesser beträgt 6,5 mm. Die beiden Enden 101, 102 des Entladungsgefäßes 10 sind jeweils mittels einer Molybdänfolien-Einschmelzung 103, 104 abgedichtet. Die Molybdänfolien 103, 104 besitzen jeweils eine Länge von 6,5 mm, eine Breite von 2 mm und eine Dicke von 25 µm. Im Innenraum des Entladungsgefäßes 10 befinden sich zwei Elektroden 11, 12, zwischen denen sich während des Lampenbetriebes der für die Lichtemission verantwortliche Entladungsbogen ausbildet. Die Elektroden 11, 12 bestehen aus Wolfram. Ihre Dicke bzw. ihr Durchmesser beträgt 0,30 mm. Die Länge der Elektroden 11, 12 beträgt jeweils 7,5 mm. Der Abstand zwischen den Elektroden 11, 12 beträgt 4,1 mm. Die Elektroden 11, 12 sind jeweils über eine der Molybdänfolien-Einschmelzungen 103, 104 und über die sockelferne Stromzuführung 13 und die Stromrückführung 17 bzw. über die sockelseitige Stromzuführung 14 elektrisch leitend mit einem elektrischen Anschluss des im wesentlichen aus Kunststoff bestehenden Lampensockels 15 verbunden. Der Überlapp zwischen der Elektrode 11 und der mit ihr verbundenen Molybdänfolie 103 beträgt 1,3 mm ± 0,15 mm. Der geringste Abstand der Molybdänfolie 103 zu dem in den Innenraum des Entladungsgefäßes 10 hineinragenden Ende der Elektrode 11 beträgt 6,2 mm ± 0,15 mm. Das heißt, der Abstand der Molybdänfolie 103 zu dem sich während des Lampenbetriebs in dem Entladungsgefäß 10 ausbildenden Entladungsbogen beträgt 6,2 mm ± 0,15 mm. Eine analoge Aussage gilt auch für die Molybdänfolie 104 und die Elektrode 12. Details hierzu sind in der WO 2005/112074 offenbart. Das Entladungsgefäß 10 wird von einem gläsernen Außenkolben 16 umhüllt. Der Außenkolben 16 besitzt einen im Sockel 15 verankerten Fortsatz 161. Das Entladungsgefäß 10 weist sockelseitig eine rohrartige Verlängerung 105 aus Quarzglas auf, in der die sockelseitige Stromzuführung 14 verläuft.

Der der Stromrückführung 17 zugewandte Oberflächenbereich des Entladungsgefäßes 10 ist mit einer lichtdurchlässigen, elektrisch leitfähigen Beschichtung 107 versehen. Diese Beschichtung 107 erstreckt sich in Längsrichtung der Lampe über die gesamte Länge des Entladungsraumes 106 und über einen Teil, ca. 50 Prozent, der Länge der abgedichteten Enden 101, 102 des Entladungsgefäßes 10. Die Beschichtung 107 ist auf der Außenseite des Entladungsgefäßes 10 angebracht und erstreckt sich über ca. 5 Prozent bis 10 Prozent des Umfangs des Entladungsgefäßes 10. Die Beschichtung 107 kann sich aber auch über 50 Prozent des Umfangs des Entladungsgefäßes 10 oder sogar über mehr als 50 Prozent des Umfangs des Entladungsgefäßes 10 erstrecken. Eine derartig breite Ausführung der Beschichtung 107 hat den Vorteil, dass sie die Effizienz der Hochdruckentladungslampe steigert, da sie einen Teil der von der Entladung erzeugten Infrarotstrahlung in das Entladungsgefäß zurückreflektiert und dadurch für eine selektive Erwärmung der kälteren, während des Lampenbetriebs unterhalb der Elektroden liegenden Bereiche des Entladungsgefäßes 10 sorgt, in denen sich die Metallhalogenide der ionisierbaren Füllung sammeln. Die Beschichtung 107 besteht aus dotiertem Zinnoxid, beispielsweise aus mit Fluor oder Antimon dotiertem Zinnoxid oder beispielsweise aus mit Bor und beziehungsweise oder Lithium dotiertem Zinnoxid. Diese Hochdruckentladungslampe wird in horizontaler Lage betrieben, das heißt, mit in einer horizontalen Ebene angeordneten Elektroden 11, 12, wobei die Lampe derart ausgerichtet ist, dass die Stromrückführung 17 unterhalb des Entladungsgefäßes 30 und des Außenkolbens 16 verläuft. Details dieser, als Zündhilfe wirkenden Beschichtung 107 sind in der EP 1 632 985 A1 beschrieben. Der Außenkolben 16 besteht aus Quarzglas, das mit Ultraviolettstrahlen absorbierenden Stoffen dotiert ist, wie zum Beispiel Ceroxid und Titanoxid. Geeignete Glaszusammensetzungen für das Außenkolbenglas sind in der EP 0 700 579 B1 offenbart.

Die in dem Entladungsgefäß eingeschlossene ionisierbare Füllung besteht aus Xenon mit einem Kaltfülldruck, das heißt einem bei einer Raumtemperatur von 22°C gemessenen Fülldruck, von 1,6 Megapascal, aus 0,23 mg Natriumjodid, 0,165 mg Scandiumjodid, 0,05 mg Zinkjodid und aus 0,001 mg Indiumjodid. Die Brennspannung der Lampe beträgt ca. 43 Volt. Ihre Farbtemperatur liegt geringfügig oberhalb von 4000 Kelvin. Rechnet man die Jodidkomponenten der Füllung auf 1 mm³ des Entladungsgefäßvolumens um, so ergeben sich folgende Werte in Mikrogramm (µg) pro Kubikmillimeter (mm³) :

| | |
|---|---|
| Natriumjodid: | 10,2 µg/mm³ |
| Scandiumjodid: | 7,3 µg/mm³ |
| Zinkjodid: | 2,2 µg/mm³ |
| Indiumjodid: | 0,044 µg/mm³ |

Das Gewichtsverhältnis von Zinkjodid zu Indiumjodid in der ionisierbaren Füllung beträgt somit 50. Der Farbwiedergabeindex der Halogen-Metalldampf-Hochdruckentladungslampe beträgt 65 und ihre Lichtausbeute beträgt 90 lm/W. Die Wandbelastung beträgt ca. 80 W/cm².

Die erfindungsgemäße Halogen-Metalldampf-Hochdruckentladungslampe wird unmittelbar nach der Zündung der Gasentladung im Entladungsgefäß mit dem drei- bis fünffachen ihrer Nennleistung bzw. ihres Nennstroms betrieben, um ein schnelles Verdampfen der Metallhalogenide in der ionisierbaren Füllung zu gewährleisten. Unmittelbar nach dem Zünden der Gasentladung wird diese fast ausschließlich vom Xenon getragen, da nur das Xenon zu diesem Zeitpunkt gasförmig im Entladungsgefäß vorliegt. Die Hochdruckentladungslampe arbeitet zu diesem Zeitpunkt und während der so genannten Anlaufphase, während der die Metallhalogenide der ionisierbaren Füllung in die Dampfphase übergehen, daher wie eine Xenon-Höchstdruckentladungslampe, bei der sowohl die Lichtemission als auch die elektrische Eigenschaften der Entladung, insbesondere der Spannungsabfall über der Entladungsstrecke, allein vom Xenon bestimmt werden. Erst wenn die oben genannten Jodide der ionisierbaren Füllung verdampft sind und diese an der Entladung teilnehmen, ist ein quasistationärer Betriebszustand der Lampe erreicht, in dem die Lampe mit ihrer Nennleistung von 35 Watt und einer Brennspannung von 43 Volt betrieben wird. Der Begriff Brennspannung bezeichnet demzufolge die Betriebsspannung der Hochdruckentladungslampe im quasistationären Betrieb.

Die in den Figuren 2 bis 4 dargestellten Messungen wurden alle während des quasistationären Lampenbetriebs durchgeführt.

In Figur 2 ist die Abhängigkeit des Lichtstroms von der Betriebsdauer der Hochdruckentladungslampe für erfindungsgemäße Halogen-Metalldampf-Hochdruckentladungslampen im Vergleich zu den Halogen-Metalldampf-Hochdruckentladungslampen gemäß dem Stand der Technik dargestellt. Die Kurve 1 zeigt den Verlauf für die erfindungsgemäßen Lampen und Kurve 2 den Verlauf für Lampen gemäß dem Stand der Technik. In beiden Fällen beträgt der anfängliche Lichtstrom ca. 3200 Lumen. Nach 1500 Betriebsstunden ist der Lichtstrom bei den Hochdruckentladungslampen gemäß dem Stand der Technik bereits auf einen Wert unterhalb von 2400 Lumen abgefallen, während er bei den erfindungsgemäßen Hochdruckentladungslampen noch einen Wert oberhalb von 2400 Lumen besitzt. Noch deutlicher fällt der Unterschied nach 3000 Betriebsstunden aus. Die erfindungsgemäßen Hochdruckentladungslampen weisen nach 3000 Betriebsstunden noch einen Lichtstrom von ca. 2300 Lumen auf, während er bei den Hochdruckentladungslampen gemäß dem Stand der Technik auf einen Wert von ca. 2100 Lumen abgefallen ist.

In Figur 3 ist die Abhängigkeit der Brennspannung von der Betriebsdauer der Hochdruckentladungslampe für erfindungsgemäße Hochdruckentladungslampen im Vergleich zu Hochdruckentladungslampen gemäß dem Stand der Technik dargestellt. Kurve 3 zeigt den Verlauf für die erfindungsgemäßen Hochdruckentladungslampen und Kurve. 4 für die Hochdruckentladungslampen gemäß dem Stand der Technik. Die anfängliche Brennspannung beträgt bei den erfindungsgemäßen Hochdruckentladungslampen ca. 43 Volt und ist nach 3000 Betriebsstunden auf einen Wert von ungefähr 56 Volt angewachsen. Die prozentuale Zunahme der Brennspannung beträgt bei den erfindungsgemäßen Hochdruckentladungslampen also ca. 30 Prozent. Bei den Hochdruckentladungslampen gemäß dem Stand der Technik beträgt die anfängliche Brennspannung ungefähr 47 Volt und ist nach 3000 Betriebsstunden auf einen Wert von ca. 63 Volt angewachsen. Das heißt, die prozentuale Zunahme der Brennspannung beträgt bei den Hochdruckentladungslampen gemäß dem Stand der Technik ungefähr 40 Prozent. Die Zunahme der Brennspannung ist auf einen Verlust von Natrium- und Scandium-Ionen und dem entsprechend überschüssigen Jod in der ionisierbaren Füllung zurückzuführen.

In Figur 4 ist die Verschiebung des Farbortes des von den Hochdruckentladungslampen emittierten Lichts in Abhängigkeit von der Betriebsdauer der Hochdruckentladungslampen für die erfindungsgemäßen Halogen-Metalldampf-Hochdruckentladungslampen dargestellt. Zu Beginn liegt der Farbort der erfindungsgemäßen Hochdruckentladungslampen bei den Farbortkoordinaten x=0,383 und y=0,39 sowie bei einer Farbtemperatur von ungefähr 4000 Kelvin. Mit zunehmender Betriebsdauer verschiebt sich der Farbort des emittierten Lichts zu kleineren x- und γ-Werten und einer höheren Farbtemperatur. Nach 3000 Betriebsstunden liegt der Farbort des von den erfindungsgemäßen Hochdruckentladungslampen emittierten Lichts bei x=0,37 und y=0,369 und einer Farbtemperatur von ca. 4300 Kelvin. Diese Farbort- und Farbtemperaturverschiebung ist auf die bereits oben erwähnte, durch den Verlust von Natrium und Scandium bedingte Änderung der Zusammensetzung der ionisierbaren Füllung zurückzuführen. Wie aus Figur 4 ersichtlich ist, bleibt der Farbort des von den erfindungsgemäßen Hochdruckentladungslampen emittierten Lichts während der gesamten gemessenen Betriebsdauer innerhalb des gestrichelt dargestellten Trapezes, das die Farborte des weißen Lichts abgrenzt. Das heißt, die erfindungsgemäßen Hochdruckentladungslampen emittieren während ihrer gesamten Betriebsdauer weißes Licht.

Die Erfindung beschränkt sich nicht auf das oben näher erläuterte Ausführungsbeispiel der Erfindung. Beispielsweise können die Gewichtsanteile der Komponenten der ionisierbaren Füllung in den oben genannten Grenzen variiert werden. Außerdem kann beispielsweise die Geometrie oder Abmessungen der Elektroden und Molybdänfolien verändert werden. Insbesondere kann die Dicke der Elektroden 11, 12 erhöht werden, beispielsweise auf einen Wert von 0,33 Millimeter, um sie für eine höhere Stromstärke tauglich zu machen. Ferner kann auch der Überlapp zwischen der Elektrode 11 bzw. 12 und der mit ihr verbundenen Molybdänfolie 103 bzw. 104 anstatt des oben genannten Wertes einen anderen Wert aufweisen. Bevorzugte Werte für den Überlapp liegen im Bereich von 1 mm bis 1,6 mm. Des Weiteren kann auch das Volumen des Entladungsgefäßes 10 einen anderen Wert als den des bevorzugten Ausführungsbeispiels besitzen. Das Volumen des Entladungsgefäßes ist nur mit einer Genauigkeit von circa 10 Prozent bestimmbar.

## Patentansprüche

1. Hochdruckentladungslampe mit einem gasdicht verschlossenen Entladungsgefäß (10), in dem Elektroden (11, 12) und eine ionisierbare Füllung zur Erzeugung einer Gasentladung eingeschlossen sind, wobei die ionisierbare Füllung als quecksilberfreie Füllung ausgebildet ist, die Xenon und Halogenide der Metalle Natrium, Scandium, Zink und Indium umfasst, und wobei das Gewichtsverhältnis der Halogenide von Zink und Indium im Bereich von 20 bis 100 liegt und der Kaltfülldruck von Xenon im Bereich von 1,3 Megapascal bis 1,8 Megapascal liegt, **dadurch gekennzeichnet, dass** das Volumen des Entladungsgefäßes (10) kleiner als 23 mm³ ist.

2. Hochdruckentladungslampe nach Anspruch 1, wobei der Gewichtsanteil der Halogenide von Zink im Bereich von 0,88 Mikrogramm bis 2,67 Mikrogramm pro 1 mm³ Entladungsgefäßvolumen liegt und der Gewichtsanteil der Halogenide von Indium im Bereich von 0,026 Mikrogramm bis 0,089 Mikrogramm pro 1 mm³ Entladungsgefäßvolumen liegt.

3. Hochdruckentladungslampe nach einem oder mehreren der Ansprüche 1 bis 2, wobei der Gewichtsanteil der Halogenide von Natrium im Bereich von 6,6 Mikrogramm bis 13, 3 Mikrogramm pro 1 mm³ des Entladungsgefäßvolumen liegt und der Gewichtsanteil der Halogenide von Scandium im Bereich von 4,4 Mikrogramm bis 11,1 Mikrogramm pro 1 mm³ des Entladungsgefäßvolumen liegt.

4. Hochdruckentladungslampe nach einem oder mehreren der Ansprüche 1 bis 3, wobei die Elektroden (11, 12) in einem Abstand von weniger als 5 Millimeter voneinander angeordnet sind.

5. Hochdruckentladungslampe nach einem oder mehreren der Ansprüche 1 bis 4, wobei die Dicke bzw. der Durchmesser der Elektroden (11, 12) im Bereich von 0,27 Millimeter bis 0,36 Millimeter liegt.

6. Hochdruckentladungslampe nach einem oder mehreren der Ansprüche 1 bis 5, wobei die Elektroden (11, 12) jeweils mit einer im Material des Entladungsgefäßes (10) eingebetteten Molybdänfolie (103, 104) verbunden sind, und der geringste Abstand der jeweiligen Molybdänfolie (103, 104) zu dem in den Innenraum (106) des Entladungsgefäßes (10) hineinragenden Ende der mit ihr verbundenen Elektrode (11, 12) mindestens 5,5 Millimeter beträgt.

7. Fahrzeugscheinwerfer mit einer Hochdruckentladungslampe gemäß einem oder mehreren der Ansprüche 1 bis 6.

## Claims

1. High-pressure discharge lamp with a discharge vessel (10) which is sealed in a gas-tight manner and in which electrodes (11, 12) and an ionizable fill for generating a gas discharge are enclosed, the ionizable fill being in the form of a mercury-free fill which comprises xenon and halides of the metals sodium, scandium, zinc and indium, and the weight ratio of the halides of zinc and indium being in the range of from 20 to 100, and the coldfilling pressure of xenon being in the range of from 1.3 megapascal to 1.8 megapascal, **characterized in that** the volume of the discharge vessel (10) is less than 23 mm³.

2. High-pressure discharge lamp according to Claim 1, wherein the weight proportion of the halides of zinc is in the range of from 0.88 microgram to 2.67 micrograms per 1 mm³ of discharge vessel volume, and the weight proportion of the halide of indium is in the range of from 0.026 microgram to 0.089 microgram per 1 mm³ of discharge vessel volume.

3. High-pressure discharge lamp according to one or more of Claims 1 to 2, wherein the weight proportion of the halides of sodium is in the range of from 6.6 micrograms to 13.3 micrograms per 1 mm³ of the discharge vessel volume, and the weight proportion of the halides of scandium is in the range of from 4.4 micrograms to 11.1 micrograms per 1 mm³ of the discharge vessel volume.

4. High-pressure discharge lamp according to one or more of Claims 1 to 3, wherein the electrodes (11, 12) are arranged at a distance of less than 5 millimeters from one another.

5. High-pressure discharge lamp according to one or more of Claims 1 to 4, wherein the thickness or the diameter of the electrodes (11, 12) is in the range of from 0.27 millimeter to 0.36 millimeter.

6. High-pressure discharge lamp according to one or more of Claims 1 to 5, wherein the electrodes (11, 12) are each connected to a molybdenum foil (103, 104) embedded in the material of the discharge vessel (10), and the smallest distance between the respective molybdenum foil (103, 104) and that end of the electrode (11, 12) connected thereto which protrudes into the interior (106) of the discharge vessel (10) is at least 5.5 millimeters.

7. Vehicle headlight with a high-pressure discharge lamp according to one or more of Claims 1 to 6.

## Revendications

1. Lampe à décharge haute pression présentant un récipient de décharge (10) fermé de façon étanche au gaz, dans lequel sont enfermés des électrodes (11, 12) et une charge ionisable pour générer une décharge de gaz, la charge ionisable étant conçue sous forme de charge sans mercure, laquelle comprend du xénon et des halogénures des métaux sodium, scandium, zinc et indium, et la fraction de poids des halogénures du zinc et de l'indium se situant dans la plage de 20 à 100 et la pression de remplissage à froid de xénon se situant dans la plage de 1,3 mégapascals à 1,8 mégapascals,
**caractérisée en ce que** le volume du récipient de décharge (10) est inférieur à 23 mm³.

2. Lampe à décharge haute pression selon la revendication 1, la fraction de poids des halogénures de zinc se situant dans la plage de 0,88 microgramme à 2,67 microgrammes pour 1 mm³ de volume de récipient de décharge et la fraction de poids des halogénures de l'indium se situant dans la plage de 0,026 microgramme à 0,089 microgramme pour 1 mm³ du volume de récipient de décharge.

3. Lampe à décharge haute pression selon l'une quelconque ou plusieurs des revendications 1 à 2, la fraction de poids des halogénures de sodium se situant dans la plage de 6,6 microgrammes à 13,3 microgrammes pour 1 mm³ du volume de récipient de décharge et la fraction de poids des halogénures du scandium se situant dans la plage de 4,4 microgrammes à 11,1 microgrammes pour 1 mm³ du volume de récipient de décharge.

4. Lampe à décharge haute pression selon l'une quelconque ou plusieurs des revendications 1 à 3, les électrodes (11, 12) étant disposées à une distance de moins de 5 millimètres les unes des autres.

5. Lampe à décharge haute pression selon l'une ou plusieurs des revendications 1 à 4, l'épaisseur ou le diamètre des électrodes (11, 12) se situant dans la plage de 0,27 millimètre à 0,36 millimètre.

6. Lampe à décharge haute pression selon l'une quelconque ou plusieurs des revendications 1 à 5, les électrodes (11, 12) étant reliées respectivement à un film de molybdène (103, 104) incorporé dans le matériau du récipient de décharge (10), et la plus faible distance du film de molybdène respectif (103, 104) à l'extrémité dépassant à l'intérieur (106) du récipient de décharge (10) étant d'au moins 5,5 millimètres

7. Phare de véhicule doté d'une lampe à décharge haute pression selon l'une ou plusieurs des revendications 1 à 6.
